# FASCICULE DE BREVET EUROPEEN

(11) **EP 1 216 778 B1**
(45) Date de publication et mention de la délivrance du brevet: **09.02.2005**
(21) Numéro de dépôt: 00128317.5
(22) Date de dépôt: 22.12.2000
(51) Int. Cl.: B23H 1/10

(54) **Dispositif de purification de liquides d'usinage pour machines à életroérosion**
Vorrichtung zur Reinigung von Bearbeitungsflüssigkeiten in einer Funkenerosionsmaschine
Device for purifying the processing liquids in an electroerosion machine

(43) Date de publication de la demande: 26.06.2002
(73) Titulaire: CHARMILLES TECHNOLOGIES S.A., 1217 Meyrin 1 (CH)
(72) Inventeur: Demellayer, René, 1214 Vernier (CH)
(74) Mandataire: Micheli & Cie

(56) Documents cités:
- EP-A- 0 673 702
- CH-A- 670 785
- US-A- 5 298 161
- PATENT ABSTRACTS OF JAPAN vol. 005, no. 203 (M-103), 23 décembre 1981 (1981-12-23) & JP 56 119317 A (INOUE JAPAX RES INC), 18 septembre 1981 (1981-09-18)

## Description

La présente invention concerne un dispositif de purification de liquides d'usinage pour machine à électroérosion munie d'une électrode destinée à usiner une pièce, le liquide d'usinage étant constitué par un liquide diélectrique contenant au moins des premières particules d'un additif destinées à faciliter l'électroérosion et des secondes particules de contamination provenant de l'électrode et/ou de la pièce et présentant une densité plus élevée que les premières particules.

Il a été démontré que, lors d'un usinage par machine à électroérosion, l'adjonction d'un additif sous forme de poudre présentant des particules de l'ordre de quelques microns améliore grandement les performances de l'usinage, voir par exemple le brevet CH 670.785.

Lors de l'usinage par électroérosion avec des poudres et particules comme additifs, le principal élément non résolu est la filtration et la purification du liquide d'usinage utilisé et contaminé.

On rencontre dans ce dernier les particules de l'additif, des particules sous forme de sphérules métalliques de la matière de la pièce et de l'électrode, ainsi que des particules de carbone colloïdal sous forme d'amas sub-microniques dans le cas de liquides diélectriques carbonés.

Une filtration idéale ne devrait garder que le liquide diélectrique et les particules de l'additif. Les filtrations traditionnelles ne permettent cependant pas de réaliser la filtration voulue, car une filtration grossière (> 20 µm) laisse passer beaucoup de sphérules métalliques fines. Au contraire, une filtration fine élimine, en plus des sphérules métalliques, les poudres additives. Une séparation magnétique ne fonctionne que pour les sphérules métalliques magnétiques, mais pas pour toutes les autres sphérules.

La présente invention a pour but de remédier à ces inconvénients et de créer un dispositif de purification permettant d'obtenir un haut degré de purification et ceci par des moyens simples à mettre en oeuvre et d'un coût de revient modéré. L'invention est caractérisée à cet effet par le fait que le dispositif comprend au moins un dispositif de décantation à ultrasons comportant un premier bac de décantation pour le liquide d'usinage dans lequel est disposé un premier organe d'émission d'ultrasons relié à un premier générateur d'ultrasons dont la puissance peut être réglée de façon que les secondes particules décantent tandis que les premières particules restent en suspension dans le liquide diélectrique.

Ces caractéristiques permettent d'obtenir une purification élevée de liquides d'usinage et un dispositif d'un coût de revient modéré et ayant une mise en oeuvre simple et un fonctionnement rapide et fiable.

Le dispositif peut comprendre en outre de façon avantageuse des moyens d'amenée du liquide d'usinage contaminé dans le premier bac de décantation et au moins une ouverture prévue dans ce dernier pour la sortie du liquide d'usinage purifié contenant les premières particules.

Selon un mode d'exécution avantageux, le dispositif comprend des moyens supplémentaires pour séparer des troisièmes particules de contamination constituées par du carbone colloïdal provenant de la décomposition du liquide d'usinage, ces moyens supplémentaires comportant un second dispositif de décantation à ultrasons avec un second bac de décantation dans lequel est disposé un second organe d'émission d'ultrasons relié à un second générateur d'ultrasons, la puissance de ce dernier étant réglée de façon que les premières particules décantent, tandis que les troisièmes particules restent en suspension dans le liquide d'usinage, ce second bac de décantation comportant une entrée reliée à ladite ouverture.

Ce mode d'exécution est particulièrement adapté au traitement des liquides d'usinage à diélectrique carboné, tel que l'huile, qu'il permet de purifier à un degré de pureté considérable.

Favorablement, les moyens supplémentaires comportent un bac de mélange avec des organes mélangeurs, des éléments de filtration du liquide d'usinage obtenu par décantation à la sortie du second bac de décantation et agencés pour retenir par filtration les troisièmes particules, un conduit d'amenée du liquide diélectrique filtré des éléments de filtration audit bac de mélange et des moyens d'extraction et de transport agencés pour transporter les premières particules décantées du second bac de décantation dans le bac de mélange.

Par ces caractéristiques, les liquides diélectriques carbonés peuvent être purifiés efficacement et une reconstitution du liquide d'usinage complet peut être effectuée de manière fiable et peu coûteuse.

D'autres avantages ressortent des caractéristiques exprimées dans les revendications dépendantes et de la description exposant ci-après l'invention plus en détail à l'aide de dessins qui représentent schématiquement et à titre d'exemple deux modes d'exécution.

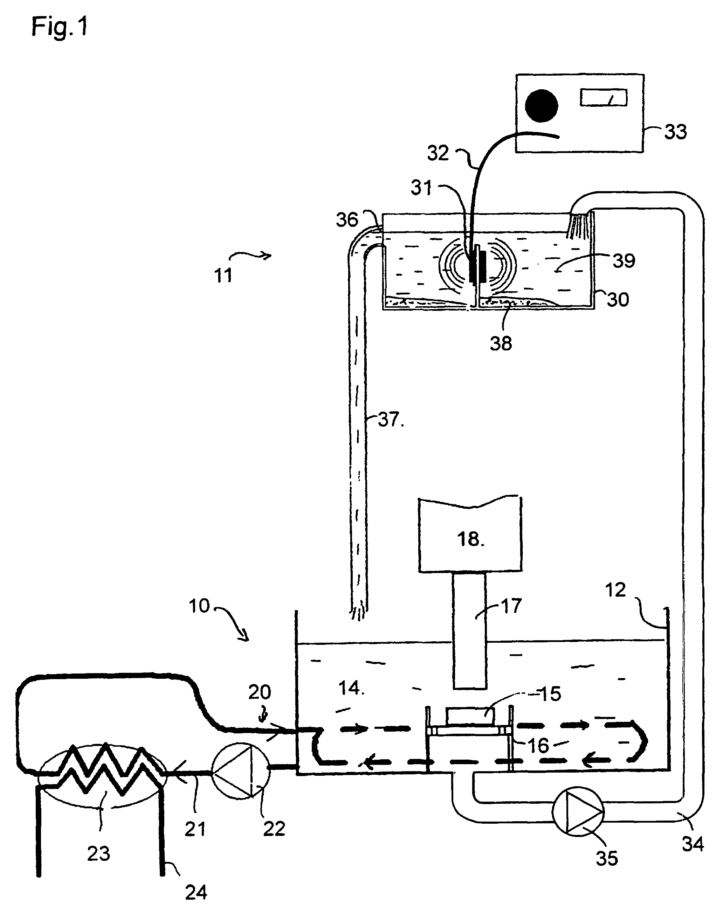

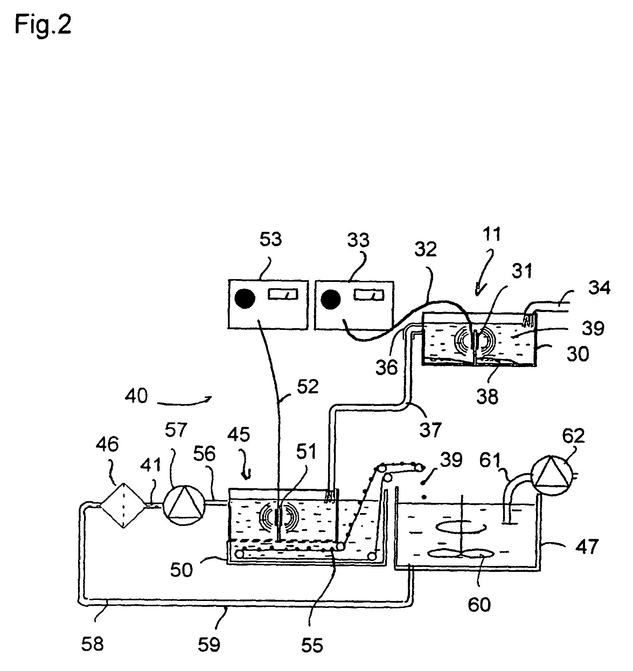

Les figures 1 et 2 sont des vues schématiques d'un premier et second mode d'exécution.

En référence à la figure 1, une machine à électroérosion 10 est équipée avec un premier mode d'exécution du dispositif de décantation 11.

Cette machine à électroérosion comprend un bac de travail 12 dans lequel est contenu un liquide d'usinage 14 et une pièce à usiner 15 montée sur une table de travail 16. La machine à électroérosion possède en outre une électrode 17 servant d'outil d'usinage montée sur une broche 18.

Le liquide d'usinage 14 est mis en circulation et thermostatisé dans le bac de travail 12 grâce à une installation de brassage 20 comportant un circuit de pompage 21 avec une pompe d'aspiration 22 et un échangeur thermique 23 relié à un circuit d'eau de refroidissement.

Le liquide d'usinage 14 est constitué par un liquide diélectrique dans lequel sont mises en suspension des premières particules d'un additif destiné à faciliter l'électroérosion et des secondes particules de contamination provenant de l'électrode et/ou de la pièce à usiner 15. Les premières particules pourront par exemple être des particules de graphite d'une densité de 2 à 2,2 gr/cm³ et d'une granulométrie choisie entre 1 et 100 µm, de préférence entre 1 et 10 µm. Les secondes particules se présentent généralement sous forme de sphérules métalliques arrachées et éjectées de la pièce à usiner et de l'électrode lors des décharges érosives. Leur densité supérieure à celle des premières particules est comprise entre 4 et 20gr/cm³.

La granulométrie de ces sphérules est généralement comprise entre 1 et 40 µm.

Lorsque le liquide diélectrique est de nature carbonée, le liquide d'usinage peut en outre comporter des troisièmes particules sous forme de particules de carbone colloïdal provenant de la décomposition du liquide diélectrique sous l'effet des décharges érosives et qui ont tendance à floculer en amas sub-microniques. La densité de ces troisièmes particules est inférieure à 2 gr/cm³ et leur diamètre généralement inférieur à 0,5 µm. Il est bien entendu que ces troisièmes particules n'existent pas dans le cas de l'eau comme liquide diélectrique.

Le premier mode d'exécution du dispositif de décantation 11 possède un bac de décantation 30 pour le liquide d'usinage dans lequel est disposé un organe d'émission d'ultrasons 31 sous forme d'une sonotrode. Cette dernière est reliée par une connexion 32 à un générateur d'ultrasons 33 d'une fréquence de 40 kHz et dont la puissance peut être réglée, par exemple de 10 à 200 Watts. Un conduit 34 muni d'une pompe d'aspiration 35 sert de moyen d'amenée du liquide d'usinage contaminé dans le bac de décantation 30. Au moins une ouverture 36 reliée à un conduit de sortie 37 permet de reconduire le liquide d'usinage purifié des secondes particules de contamination vers la machine d'électroérosion, soit dans un réservoir annexe, soit directement dans le bac de travail.

Les ultrasons sont un moyen très efficace pour mettre en suspension des particules de la taille de celle des premières particules des poudres additives. L'énergie des ultrasons pour la mise en suspension de particules doit être d'autant plus importante que la densité des particules est grande et que leur taille est importante. Il est à remarquer qu'en dessous d'une taille critique, la densité a moins d'importance que la taille pour la mise en suspension par diffusion. La décantation est en outre ralentie lorsque la viscosité du liquide d'usinage augmente. Il est donc possible de réaliser un dispositif de décantation sélectif assisté par ultrasons d'énergie modérée. La puissance du générateur d'ultrasons 30 est réglée pour chaque densité et viscosité du liquide d'usinage et chaque densité et taille des particules à séparer. Le réglage optimal permet la décantation et l'accumulation sur le fond du bac de décantation des secondes particules de contamination 38, à savoir les sphérules métalliques, tout en gardant en suspension les premières particules 39 plus légères de l'additif, tel que le graphite.

La puissance de ce générateur 33 est alors généralement réglée entre 10 et 150 Watts, de préférence entre 40 et 100 Watts.

Un tel dispositif de décantation est suffisant pour le cas de l'eau comme liquide diélectrique. Il peut également être utilisé sous cette forme si l'on accepte de laisser subsister avec les premières particules les troisièmes particules de carbone provenant de la décomposition d'un liquide diélectrique carboné, tel que l'huile.

La séparation et l'élimination des troisièmes particules nécessitent un dispositif de purification plus complet dont un mode d'exécution est décrit en référence à la figure 2.

Ce deuxième mode d'exécution comprend un premier dispositif de décantation 11 identique ou similaire à celui décrit en référence à la figure 1. Il est en outre équipé de moyens supplémentaires 40 destinés à séparer les troisièmes particules de contamination 41 du liquide d'usinage dont on a déjà décanté les secondes particules 38. Ces moyens supplémentaires comportent un second dispositif de décantation 45, des éléments de filtrations 46 et un bac de mélange 47. de décantation 50 dans lequel est déposé un second organe d'émission d'ultrasons 51, sous forme d'une seconde sonotrode reliée par une connexion 52 à un second générateur d'ultrasons 53.

Le conduit 37 de sortie du premier dispositif de décantation 11 sert de conduit d'amenée pour le liquide d'usinage contenant les premières et les troisièmes particules.

Le second générateur d'ultrasons 53 possède une fréquence de 40 kHz et sa puissance peut être réglée par exemple entre 1 et 30 Watts de préférence entre 5 et 20 Watts. Sa puissance est donc réglée de façon plus basse que celle du premier générateur 33. Elle est réglée pour maintenir en suspension les troisièmes particules 41, tandis que les premières particules décantent et s'accumulent sur une bande convoyeuse 55 servant de moyens d'extraction et de transport pour amener ces premières particules 39 au-dessus du bac de mélange 47 où elles sont déchargées.

Un conduit de sortie 56 muni d'une pompe 57 amène le liquide d'usinage avec les troisièmes particules 41 vers les éléments de filtration 46. Ces derniers sont agencés pour retenir l'ensemble des troisièmes particules 41 et comportent à cet effet au moins un filtre fin, par exemple un filtre à cartouche de papier. Le liquide diélectrique ainsi purifié 58 est amené par un conduit 59 dans le bac de mélange 47 où il est mélangé avec les premières particules par des organes mélangeurs 60, tels que des pâles ou une circulation d'air, etc. Le liquide d'usinage purifié et ainsi reconstitué est ensuite reconduit par un tuyau 61 et une pompe 62 vers la machine à électroérosion.

Ces dispositifs de purification sont particulièrement importants pour l'usinage en ébauche et en semi-finition et permettent d'éliminer les particules métalliques les plus grosses qui seraient très gênantes lors de l'usinage de finition subséquent.

Il est bien entendu que les modes de réalisation décrits ci-dessus ne présentent aucun caractère limitatif et qu'ils peuvent recevoir toutes modifications désirables à l'intérieur du cadre tel que défini par la revendication 1. En particulier, d'autres dispositifs pourraient être ajoutés, tels qu'un lavage et tout autre traitement des premières particules de l'additif sortant du second bac de décantation 50, un doseur pour les premières particules permettant d'obtenir une concentration exacte des premières particules dans le liquide d'usinage contenu dans le mélangeur 47, un dispositif d'extraction, par exemple par convoyeur, des secondes particules métalliques de contamination dans le premier bac de décantation 30. L'ensemble du dispositif de purification pourra être intégré dans la machine à électroérosion ou constituer une unité séparée de cette dernière.

## Revendications

1. Dispositif de purification de liquides d'usinage pour machine à électroérosion (10) munie d'une électrode (17) destinée à usiner une pièce (15), le liquide d'usinage (14) étant constitué par un liquide diélectrique contenant au moins des premières particules (39) d'un additif destiné à faciliter l'électroérosion et des secondes particules (38) de contamination provenant de l'électrode (17) et/ou de la pièce (15) et présentant une densité plus élevée que les premières particules (39), **caractérisé par le fait que** le dispositif comprend au moins un dispositif de décantation à ultrasons (11) comportant un premier bac de décantation (30) pour le liquide d'usinage (14) dans lequel est disposé un premier organe d'émission d'ultrasons (31) relié à un premier générateur d'ultrasons (33) dont la puissance peut être réglée de façon que les secondes particules (38) décantent, tandis que les premières particules (39) restent en suspension dans le liquide diélectrique.

2. Dispositif selon la revendication 1, **caractérisé par le fait qu'**il comprend des moyens d'amenée (34, 35) du liquide d'usinage contaminé dans le premier bac de décantation (30) et au moins une ouverture (36) prévue dans ce dernier pour la sortie du liquide d'usinage purifié contenant les premières particules (39).

3. Dispositif selon la revendication 2, **caractérisé par le fait qu'**il comprend des moyens supplémentaires (40) pour séparer des troisièmes particules (41) de contamination constituées par du carbone colloïdal provenant de la décomposition du liquide d'usinage, ces moyens supplémentaires (40) comportant un second dispositif de décantation à ultrasons (45) avec un second bac de décantation (50) dans lequel est disposé un second organe d'émission d'ultrasons (51) relié à un second générateur d'ultrasons (53), la puissance de ce dernier étant réglée de façon que les premières particules (39) décantent, tandis que les troisièmes particules (41) restent en suspension dans le liquide d'usinage, ce second bac de décantation (50) comportant une entrée reliée à ladite ouverture (36).

4. Dispositif selon la revendication 3, **caractérisé par le fait que** les moyens supplémentaires (40) comportent un bac de mélange (47) avec des organes mélangeurs (60), des éléments de filtration (46) du liquide d'usinage obtenu par décantation à la sortie du second bac de décantation (50) et agencés pour retenir par filtration les troisièmes particules (41), un conduit d'amenée (59) du liquide diélectrique filtré des éléments de filtration (46) audit bac de mélange (47) et des moyens d'extraction et de transport (55) agencés pour transporter les premières particules (39) décantées du second bac de décantation (50) dans le bac de mélange (47).

5. Dispositif selon la revendication 4, **caractérisé par le fait que** lesdits moyens d'extraction et de transport sont constitués par une bande convoyeuse (55) agencée dans le fond du second bac de décantation (50) et menant jusqu'au-dessus du bac de mélange (47) pour décharger les premières particules (39) dans ce dernier.

6. Dispositif selon la revendication 3, **caractérisé par le fait que** le premier générateur d'ultrasons (33) est réglé à une puissance comprise entre 10 et 150 Watts, de préférence entre 40 et 100 Watts et **par le fait que** le second générateur d'ultrasons (53) est réglé à une puissance plus faible, comprise entre 1 et 30 Watts, de préférence entre 5 et 20 Watts.

## Patentansprüche

1. Vorrichtung zur Reinigung von Bearbeitungsflüssigkeiten für eine Funkenerosionsmaschine (10), die mit einer Elektrode (17) versehen ist, die dafür bestimmt ist, ein Werkstück (15) zu bearbeiten, wobei die Bearbeitungsflüssigkeit (14) aus einer dielektrischen Flüssigkeit besteht, die zumindest erste Teilchen (39) eines Zusatzstoffes enthält, der dafür bestimmt ist, die Funkenerosion zu erleichtem, sowie zweite Teilchen (38) einer von der Elektrode (17) und/oder dem Werkstück (15) kommenden Verschmutzung, die eine höhere Dichte als die ersten Teilchen (39) aufweisen, **dadurch gekennzeichnet, dass** die Vorrichtung zumindest eine Ultraschall-Dekantiervorrichtung (11) mit einem ersten Dekantiergefäss (30) für die Bearbeitungsflüssigkeit (14) umfasst, in der ein erstes Ultraschall-Sendeorgan (31) angeordnet ist, das mit einem ersten Ultraschallgenerator (33) verbunden ist, dessen Leistung so geregelt werden kann, dass die zweiten Teilchen (38) dekantieren, während die ersten Teilchen (39) in der dielektrischen Flüssigkeit suspendiert bleiben.

2. Vorrichtung nach Anspruch 1, **dadurch gekennzeichnet, dass** sie Mittel für eine Einleitung (34, 35) der verschmutzten Verarbeitungsflüssigkeit in das erste Dekantiergefäss (30) sowie zumindest eine Öffnung (36) umfasst, die in letzterem für den Austrag der die ersten Teilchen (39) enthaltenden, gereinigten Bearbeitungsflüssigkeit vorgesehen ist.

3. Vorrichtung nach Anspruch 2, **dadurch gekennzeichnet, dass** sie zusätzliche Mittel (40) umfasst, um dritte Teilchen (41) einer Verschmutzung abzutrennen, die aus kolloidalem Kohlenstoff bestehen, der seinen Ursprung in der Zersetzung der Bearbeitungsflüssigkeit hat, wobei diese zusätzlichen Mittel (40) eine zweite Ultraschall-Dekantiervorrichtung (45) mit einem zweiten Dekantiergefäss (50) umfassen, in dem ein zweites Ultraschall-Sendeorgan (51) angeordnet ist, das mit einem zweiten Ultraschallgenerator (53) verbunden ist, wobei die Leistung dieses Generators so geregelt werden kann, dass die ersten Teilchen (39) dekantieren, während die dritten Teilchen (41) in der Bearbeitungsflüssigkeit suspendiert bleiben, wobei dieses zweite Dekantiergefäss (50) einen mit der benannten Öffnung (36) verbundenen Eingang umfasst.

4. Vorrichtung nach Anspruch 3, **dadurch gekennzeichnet, dass** die zusätzlichen Mittel (40) ein Mischgefäss (47) mit Mischorganen (60), Filtrierelemente (46) für die durch Dekantieren am Ausgang des zweiten Dekantiergefässes (50) erhaltene Bearbeitungsflüssigkeit, die so eingerichtet sind, dass sie die dritten Teilchen (41) durch Filtrieren zurückhalten, eine Zuleitung (59) für die filtrierte dielektrische Flüssigkeit von den Filtrierelementen (46) zu dem benannten Mischgefäss (47) sowie Mittel für den Austrag und Transport (55) umfassen, die dafür eingerichtet sind, die dekantierten ersten Teilchen (39) vom zweiten Dekantiergefäss (50) zum Mischgefäss (47) zu transportieren.

5. Vorrichtung nach Anspruch 4, **dadurch gekennzeichnet, dass** die benannten Mittel für den Austrag und Transport aus einem Förderband (55) bestehen, das im Boden des zweiten Dekantiergefässes (50) angeordnet ist und bis zu einem Punkt über dem Mischgefäss (47) führt, um die ersten Teilchen (39) in dieses Gefäss zu entladen.

6. Vorrichtung nach Anspruch 3, **dadurch gekennzeichnet, dass** der erste Ultraschallgenerator (33) auf eine Leistung geregelt ist, die zwischen 10 und 150 Watt, bevorzugt zwischen 40 und 100 Watt liegt, während der zweite Ultraschallgenerator (53) auf eine schwächere Leistung geregelt ist, die zwischen 1 und 30 Watt, bevorzugt zwischen 5 und 20 Watt liegt.

## Claims

1. Device for purifying machining liquids for electroerosion machines (10) provided with an electrode (17) adapted to machine a piece (15), the machining liquid (14) being constituted by a dielectric liquid containing at least first particles (39) of an additive adapted to facilitate electroerosion and second particles (38) of contamination arising from the electrode (17) and/or from the piece (15) and having a higher density than the first particles (39), **characterized by** the fact that the device comprises at least one ultrasonic decantation device (11) comprising a first decantation receptacle (30) for the machining liquid (14) in which is disposed a first ultrasonic emission member (31) connected to a first ultrasonic generator (33) whose power can be adjusted such that the second particles (38) decant, whilst the first particles (39) remain in suspension in the dielectric liquid.

2. Device according to claim 1, **characterized by** the fact that it comprises supply means (34, 35) for supplying contaminated machining liquid into the first decantation receptacle (30) and at least one opening (36) provided in this latter for discharging purified machining liquid containing the first particles (39).

3. Device according to claim 2, **characterized by** the fact that it comprises supplemental means (40) to separate third particles (41) of contamination constituted by colloidal carbon from the decomposition of the machining liquid, these supplemental means (40) comprising a second ultrasonic decantation device (45) with a second decantation receptacle (50) in which is disposed a second ultrasonic emission member (51) connected to a second ultrasonic generator (53), the power of this latter being adjusted such that the first particles (39) decant, whilst the third particles (41) remain in suspension in the machining liquid, this second decantation receptacle (50) comprising an inlet connected to said opening (36).

4. Device according to claim 3, **characterized by** the fact that the supplemental means (40) comprise a mixing receptacle (47) with mixing members (60), filtering elements (46) for the machining liquid obtained by decantation at the outlet of the second decantation receptacle (50) and arranged to retain by filtration the third particles (41), a supply conduit (59) for the filtered dielectric liquid from the filtration elements (46) to said mixing receptacle (47) and extraction transport means (55) arranged to transport the first particles (39) decanted from the second decantation receptacle (50) into the mixing receptacle (47).

5. Device according to claim 4, **characterized by** the fact that said extraction and transport means are constituted by a conveyor belt (55) arranged in the bottom of the second decantation receptacle (50) and extending above the mixing receptacle (47) to discharge the first particles (39) into this latter.

6. Device according to claim 3, **characterized by** the fact that the first ultrasonic generator (33) is adjusted to a power comprised between 10 and 150 watts, preferably between 40 and 100 watts, and by the fact that the second ultrasonic generator (53) is adjusted to a lower power, comprised between 1 and 30 watts, preferably between 5 and 20 watts.
